(19) Europäisches Patentamt

European Patent Office

Office européen des brevets

(11) **EP 0 948 157 B1**

(12) **EUROPÄISCHE PATENTSCHRIFT**

(45) Veröffentlichungstag und Bekanntmachung des Hinweises auf die Patenterteilung:
**13.07.2005 Patentblatt 2005/28**

(51) Int Cl.⁷: **H04L 7/033**, H04L 25/49

(21) Anmeldenummer: **99104711.9**

(22) Anmeldetag: **10.03.1999**

(54) **Verfahren zum Übertragen von digitalen Datenimpulsen mit einem in seiner Taktfrequenz steuerbaren Datenübernahmetaktgenerator**

Method for transmission of digital data pulses with data reclocking generator controlling its clock frequency

Méthode de transmission d' impulsions numériques avec générateur de resynchronisation dirigeant son horloge

(84) Benannte Vertragsstaaten:
**DE ES FR GB IT SE**

(30) Priorität: **28.03.1998 DE 19813965**

(43) Veröffentlichungstag der Anmeldung:
**06.10.1999 Patentblatt 1999/40**

(73) Patentinhaber:
• **Conti Temic microelectronic GmbH**
**90411 Nürnberg (DE)**
• **ROBERT BOSCH GMBH**
**70442 Stuttgart (DE)**

(72) Erfinder:
• **Fendt, Günter**
**86529 Schrobenhausen (DE)**
• **Bischoff, Michael**
**85111 Adelschlag (DE)**
• **Rinkens, Johannes**
**85055 Ingolstadt (DE)**
• **Schäffer, Stefan**
**86529 Schrobenhausen (DE)**
• **Nitschke, Werner**
**71254 Ditzingen (DE)**
• **Karl, Otto**
**71229 Leonberg (DE)**
• **Bauer, Joachim**
**71720 Oberstenfeld (DE)**

(56) Entgegenhaltungen:
EP-A- 0 813 321        WO-A-94/01953
US-A- 4 317 211        US-A- 4 361 895

• "DIFFERENTIAL MANCHESTER DECODER REQUIRING LOW SPEED SYSTEM CLOCK" IBM TECHNICAL DISCLOSURE BULLETIN, IBM CORP. NEW YORK, US, Bd. 31, Nr. 10, 1. März 1989 (1989-03-01), Seiten 100-103, XP000118776 ISSN: 0018-8689

**Beschreibung**

Die Erfindung betrifft ein Verfahren zum Übertragen von digitalen Datenimpulsen mit einem in seiner Taktfrequenz steuerbaren Datenübernahmetaktgenerator gemäß dem Oberbegriff des Patentanspruchs 1.

Insbesondere aus der EP 0 813 321 A2 sowie deren prioritätsbegründenden Anmeldungen DE 196 23 750 und DE 196 43 205 ist ein gattungsgemäßes Verfahren zu entnehmen. Durch die darin gelehrte Erfassung der Taktfrequenz mittels eines entsprechend hochfrequenten Oszillatortaktes aus der Impulsdauer wird es möglich, einen in seiner Taktfrequenz steuerbaren Datenübernahmetaktgenerator der Taktfrequenz des gesendeten Signals nachzuführen oder aber Toleranzschwankungen aufgrund einfacher RC-Oszillatoren auszugleichen. Die Oszillatortakte werden dabei einerseits zur Erfassung der Zeitdauer eines Impulses und damit der Taktfrequenz eingesetzt ; sie dienen andererseits auch als Takt für die Zähler, die beim Erreichen von schwellwerten die System- und Datenübernahmetakte erzeugen. Die Schwellwerte können ihrerseits auch aus der Taktfrequenz abgeleitet werden, bspw. als Teile der Zeitdauer eines Impulses.

Da jedoch bei einer üblichen Bitfolge von digitalen Datenimpulsen unbekannten Impulspegels eine permante Nachsynchronisierung nicht möglich ist, mußte bei diesen nach einer bekannten Anzahl von Datenimpulsen durch erneute Synchronisationsimpulse eine wiederholte Neusynchronisierung realisiert werden.

Durch die der EP 0 813 321 entnehmbare Weiterbildung für putsweitenmodulierte Signale wird aufgrund des nun für jedem Datenimpuls vorgesehenen Flankenwechsels eine Nachsynchronisierung über die Datenimpulse möglich. Eine Umsetzung digitaler Datenimpulse in eine Pulsweitenmodulation ist jedoch recht aufwendig und bietet sich daher nicht für alle Anwendungsfälle an.

Darüber hinaus sind grundsätzlich aus dem Stand der Technik auch taktrückgewinnbare Codierungsverfahren für digitale Datenimpulse, insbesondere das Manchesterverfahren bekannt.

So beschreibt beispielsweise die EP 0 178 622 A2 ein Verfahren zur Taktrückgewinnung bei einer manchestercodierten Datenübertragung mit einem spannungsgesteuerter Oszillator (VCO), einem Frequenzteiler sowie Auswahlmitteln und einen Phasendetektor auf. Auch aus der EP 0 185 556 A2 und der EP 0 425 302 A2 können ein Verfahren zur Taktrückgewinnung für manchestercodierte Signale bzw. ein digitaler Phasenregelschleifendecoder entnommen werden.

Das Manchesterverfahren ist aufgrund seiner Taktrückgewinnbarkeit und Gleichanteilsfreiheit äußerst vorteilhaft. So liegt der Flankenwechsel bei der Manchestercodierung jeweils innerhalb eines Datenimpulses zwischen einer invertierten und nichtinvertierten Impulshälfte und nicht am Anfang oder Ende eines Datenimpulsbereichs.

Eine Anwendung des gattungsbildenden Verfahrens auf manchesterkodierte Impulse ist aus dem Artikel "DIFFERENTIAL MANCHESTER DECODER REQUIRING LOW SPEED SYSTEM CLOCK", IBM TECHNICAL DISCLOSURE BULLETIN, Bd. 31, Nr. 10, 1.3.1989, Seiten 100-103, XP000118776 ISSN: 0018-8689 bekannt. Hierbei wird ein Zähler bei einem Flankenwechsel in der Mitte der Impulse zurückgesetzt und dieser zählt dann den Zeitbereich bis zu dem nächsten Flankenwechsel. Die Datenerfassung erfolgt durch zu den Flankenwechseln zeitversetzte Abtastung.

Die aus dem Stand der Technik bekannten Synchronisationsverfahren weisen jedoch den Nachteil auf, daß bei Nichterkennen des Flankenwechsels aufgrund von Störungen die Übertragung abgebrochen werden muß.

Aufgabe der Erfindung ist es daher, ein Verfahren der gattungsgemäßen Art vorzustellen, welches diesen Nachteil behebt.

Diese Aufgabe wird durch die kennzeichnenden Merkmale des Patentanspruchs 1 gelöst. Vorteilhafte Weiterbildungen der Erfindung sind den Unteransprüchen zu entnehmen.

Grundlegende Voraussetzung für die Umsetzbarkeit war es, sich von der Zeitdauer **eines** Synchronisations- bzw. Datenimpulses als den die Taktfrequenz repräsentierenden Zeitbereich zu lösen. Statt dessen werden die Charakteristiken der Manchestercodierung konsequent eingesetzt. So erfolgt die Synchronisation zwar nun inmitten eines Synchronisations- bzw. Datenimpulses, ist aber an dieser Stelle aufgrund des dort jeweils auftretenden Flankenwechsels immer und genau möglich, so daß dieser als Synchronisationszeitpunkt verwendet wird. Als der die Taktfrequenz ebenfalls repräsentierender Zeitbereich wird die Zeitdauer zwischen zwei Synchronisationszeitpunkten verwendet, wenngleich sich diese Zeitdauer jeweils über die Impulshälften zweier Synchronisations- bzw. Datenimpulse erstreckt.

Die Taktfrequenz wird mittels des an sich bekannten Abzählens der Oszillatortakte erfaßt. Der Datenübernahmegenerator übernimmt jeweils zum Synchronisationszeitpunkt, also in der Impulsmitte, die jeweils aktuelle Taktfrequenz, erfaßt jedoch zeitlich versetzt dazu die Impulspegel und paßt sich diesem somit an. Um den Vorteil der Manchestercodierung, die Ein-Bit-Fehlererkennung ausnutzen zu können, werden vorzugsweise beide Impulshälften vor und nach dem Synchronisationszeitpunkt wenigstens einmal abgetastet. Die Abtastung erfolgt vorzugsweise mittels Mehrfachabtastung innerhalb eines Abtastfensters.

Die Erfindung wird nachfolgend anhand von Ausführungsbeispielen und Figuren näher erläutert.

Kurze Beschreibung der Figuren:

Figur 1     Ablaufdiagrammübersicht des Gesamtverfahrens,

Figur 2     Ablaufdiagramm, in dem insbesondere die Details der Nachsynchronisation der Datenimpulse gezeigt werden,

Figur 3     Erfassung des Logikpegels durch Mehrfachabtastung in der invertierten und nichtinvertierten Impulshälfte eines Datenimpulses

Figur 4     Blockschema eines Empfängers mit einem steuerbaren Datenübernahmetaktgenerator zur Durchführung des Verfahrens

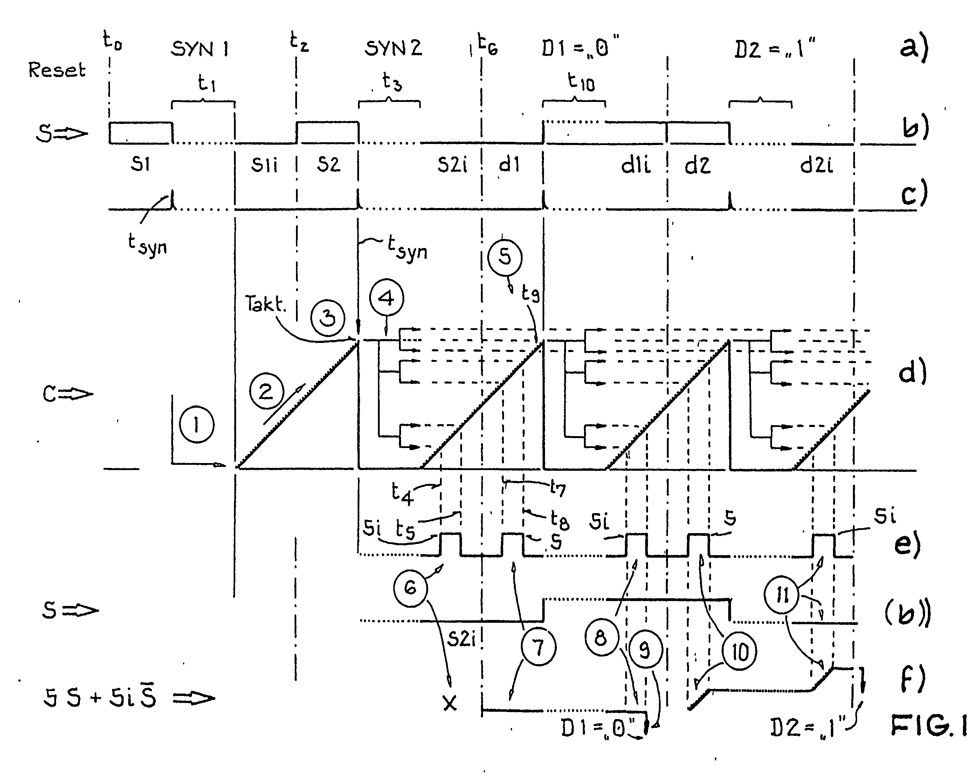

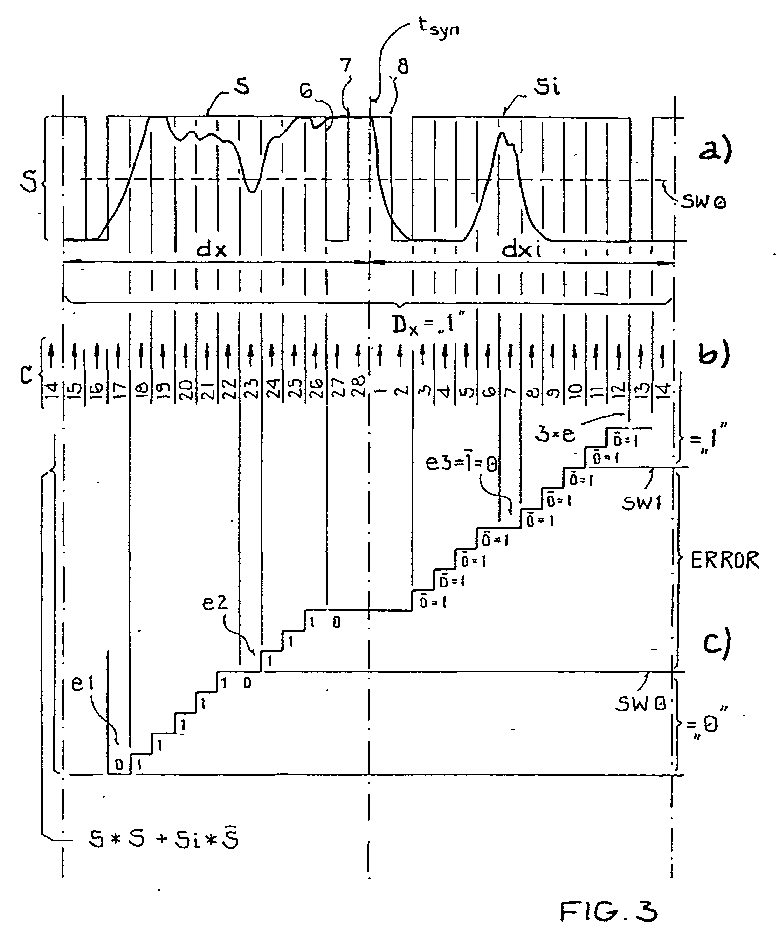

Die Figur 1 zeigt die Ablaufdiagramme 1a bis 1f ausgerichtet auf eine gemeinsame Zeitbasis t. Die Zeitbasis weist dabei eine virtuelle Unterbrechung in der Mitte jedes Impulses auf. Diese virtuelle Unterbrechung ist gekennzeichnet durch das doppelte Auftreten des gleichen Zeitpunktes, bspw. t1, verbunden durch einen beidseitigen Pfeil (t1↔t1). Diese virtuelle Unterbrechung erweist sich zur Visualisierung bestimmter Abläufe (vgl. ④ in 1d) im Zusammenhang mit dem in 1d dargestellten Datenübernahmetaktgenerators als äußerst vorteilhaft, ist jedoch real nicht vorhanden. In der Figur 3 ist ein reales Signal S, also ohne virtuelle Unterbrechung, gezeigt.

In 1a ist zunächst die Art des jeweils übertragenen Impulses zu entnehmen. Die Übertragung beginnt nach einem Reset zunächst mit zwei Synchronisationsimpulsen syn1 und syn2, denen eine Anzahl von Datenimpulsen D, in diesem Fall D1 und D2, folgt. Bei Verwendung eines einzigen Synchronisationsimpulses (syn) muß für den ersten Datenimpuls (D1) auf eine Abtastung der ersten Impulshälfte verzichtet werden, wobei der Logikpegel grundsätzlich ja auch aus einer einzigen Impulshälfte ableitbar ist.

In 1b ist der Pegel des übertragenen Signals S dargestellt. Jeder Impuls ist dabei manchestercodiert und besteht daher aus einer invertierten und einer nicht invertierten Impulshälfte, wobei an die Bezeichnung der invertierten jeweils ein "i" angehangen ist, also bspw. s1i die invertierte Impulshälfte des ersten Synchronisationsimpulses ist. In 1b wird die virtuelle Unterbrechung bspw. bei t1 und t3 deutlich. Sie folgt immer unmittelbar dem jeweils in der Mitte eines jeden Impulses auftretenden Flankenwechsels. In 1b ist auch gut zu erkennen, daß bei der Manchestercodierung ein Flankenwechsel zwar immer in der Mitte eines Impulses, am Anfang oder Ende jedoch gerade nicht immer auftritt. So schließt sich an s2i = 0 d1 mit 0 an, d1i = 1 wird jedoch von d2 = 1 gefolgt. Eine Synchronisation am Anfang bzw. Ende eines jeden Impulses ist somit nicht möglich.

In 1c sind die aus den Flankenwechseln des Signals S abgeleiteten Synchronisationszeitpunkte zu entnehmen, die nun jeweils mittig innerhalb eines jeden Impulses liegen.

In 1d bis 1f werden nun die Abläufe innerhalb des Datenübernahmetaktgenerators dargestellt, wobei

1d das Zählen der Oszillatortakte in einem Counter C und die Ableitung von Datenübernahmeschwellen aus den Zählerwerten zeigt,

1e in Abhängigkeit von den Synchronisationszeitpunkten und der Taktfrequenz erzeugte Abtastfenster und

1f einen Pegelwertzähler, der gemäß der Formel $5 * S + 5i * \bar{S}$, das Signal S in Abhängigkeit von der jeweils gerade aktuellen Impulshälfte invertiert bzw. nichtinvertiert mit den Abtastfenstern verknüpft.

Die Abläufe sind mit eingekreisten Ziffern markiert und sollen im folgenden in dieser Reihenfolge erläutert werden:

① Wenn S zum Zeitpunkt t1 erstmalig einen Flankenwechsel (vgl. 1c) aufweist, wird ein Counter C zum Zählen der Oszillatortakte zurückgesetzt und gestartet.

② Mit jedem Oszillatortakt wird der Counter C inkrementiert. Die Taktfrequenz des Oszillatortaktes ist dabei deutlich höher als die Taktfrequenz des Signals S, bspw. über 100fach größer. Zum Zeitpunkt t2 ändert sich zwar wieder die Flanke des Signals S, da jedoch während der Synchronisation für dieses Ausführungsbeispiel nur die jeweils abfallende Flanke betrachtet wird, bleibt dies ohne Auswirkung auf den Counter C. Es wird deutlich, daß der Counter C quasi um eine Impulshälfte versetzt dem eigentlichen Signal S nachfolgt.

③ Zum Zeitpunkt t3 tritt nun die nächste abfallende Flanke auf. Diese wird als nächster Synchronisationszeitpunkt erkannt. Der aktuell erreichte Zählwert des Counters C wird festgestellt und als aktuelle Taktfrequenz übernommen. Die Taktfrequenz ist hierbei vorzugsweise nicht in Hertz sondern reziprok dazu in der Anzahl der Takte anzugeben. Der Zählwert des Counters C kann, bevor er als aktuell gültige Taktfrequenz angenommen wird, natürlich zuvor erst noch logischen Vergleichen unterworfen werden.

④ Ist nun ein Zählwert des Counters C als aktuell gültige Taktfrequenz $T_{akt}$ übernommen, so werden auf Basis dieses Zählwertes mehrere Schwellen neu bestimmt, wie dies nun in der virtuellen Unterbrechung im Zeitpunkt t3 visualisiert ist.

⑤ Die aus der Taktfrequenz nun abgeleiteten Schwellen sind in Figur 1 nicht im einzelnen mit Bezugszeichen versehen. Betrachtet man aber zusätzlich die in 1e dargestellten Abtastfenster 5 und 5i, so wird deutlich, daß die Schwellen die folgende Bedeutung haben:

t4: unterste Schwelle wird erreicht; Anfang vom Abtastfenster 5i bspw. bei 6,25 % von $T_{akt}$.

t5: Counter c erreicht die zweitniedrigste Schwelle und beendet damit das Abtastfenster 5i in invertierten Bereich von syn2 (43,75 % von $T_{akt}$).

t6: Der Beginn des ersten Datenimpulses D1 in t6 hat keine Auswirkung auf den Counter C.

t7: Durch die drittniedrigste Schwelle (56,25 %) wird das Abtastfenster 5 gestartet. Dieses liegt jeweils in einem Toleranzabstand (6,25%) nach dem eigentlichen Beginn der ersten Impulshälfte d1 des ersten Datenimpulses D1 in t6.

t8: Die viertniedrigste Schwelle beendet das Abtastfenster 5.

t9: Die zwei obersten Schwellen begrenzen hingegen den Bereich des nächsten zulässigen Flankenwechsels, der bspw. mit $T_{akt} \pm 6,25$ % bestimmt ist.

t10: Zum Zeitpunkt t10 tritt der nächste Synchronisationszeitpunkt auf (vgl. 1c), so daß der Zählwert im Counter C erfaßt, die Schwellen neu abgeleitet und der Counter c neu gestartet wird, wie in der virtuellen Unterbrechung von t10 analog zu ④ skizziert ist.

⑥ Das erste Abtastfenster 5i gemäß 1e liegt noch in der invertierten Impulshälfte s2i des zweiten Synchronisationsimpulses syn2 und wird daher nicht weiter verarbeitet.

⑦ Das im gleichen zweiten Zählzyklus des Counters C liegende Abtastfenster 5 hingegen ist bereits der ersten Impulshälfte d1 des ersten Datenimpulses D1 zugeordnet, welche nicht invertiert ist. Das Signal S aus 1b ist zur besseren Übersichtlichkeit nochmals dargestellt. Da es sich zwischen t7 und t8 um die nichtinvertierte Impulshälfte d1 von D1 handelt, wird der Logikpegel auch nichtinvertiert abgetastet und es erhöht sich der Pegelzählerwert in 1 f zwischen t7 und t8 nicht, zumal in der Figur 1 zunächst von einem völlig störungsfreien Signal S ausgegangen wird.

⑧ Nachdem nun zum Zeitpunkt t10 der nächste Synchronisationszeitpunkt auftrat und der Counter C zurückgesetzt wurde, erreicht dieser im dritten Zählzyklus gemäß 1d das dennoch zu D1 gehörige Abtastfenster 5i für die jeweils invertierte Impulshälfte, in diesem Fall d1i. Da nun der Pegelzählerwert nur die innerhalb des Abtastfenster liegenden Abtastwerte des invertierten Signals $\bar{S}$ zählt, erhöht sich auch hier der Pegelzählerwert in 1f nicht. Detaillierter wird dies noch im Zusammenhang mit Fig. 3 gezeigt und beschrieben.

⑨ Aus dem Pegelzählerwert, der hier Null ist, wird der Logikwert von D1= "0" abgeleitet. ⑩ Der zweite Datenimpuls D2 hat den Logikpegel "1" und weist folglich in d2 den "High"-pegel, in d2i den "Low"-Pegel auf. Bei der Abtastung in den Abtastfenstern 5 und 5i ergibt sich dann jeweils mit jedem Oszillatortakt eine Inkrementierung des Pegelzählerwertes (vgl. 1f). Im Abtastfenster 5i wird die invertierte Impulshälfte d2i mit dem "Low"-Pegel invertiert abgetastet, also als "1", was auch in 5i zur weiteren Inkrementierung des Pegelzählerwertes führt.

Betrachtet man in Figur 1 überblicksmäßig dargestellten Prozeß, insbesondere die Synchronisation durch Zählen der Anzahl der Oszillatortakte ② in zeitlicher Beziehung zu den Impulsgrenzen gemäß 1a sowie die Lage der zu einem Datenimpuls gehörenden Abtastfenster 5 und 5i, so wird deutlich, daß die Synchronisierung und Datenübernahmetakterzeugung in 1d um eine Impulshälfte dem Signal S nachfolgt, die Abtastfenster aber wiederum um eine Impulshälfte versetzt sind, so daß diese letztlich wieder synchron zu den Datenimpulsen angeordnet sind. Da dieser Versatz aber immer in Abhängigkeit von der jeweils ermittelten Taktfrequenz ist, ist dieser Vorgang im Prinzip für jede Taktfrequenz identisch. Würde bspw. die Taktfrequenz in Fig. 1 doppelt so schnell, also doppelt so viele Impulse in 1a auftreten, würde der Counter C bereits nach der Hälfte der Zeit bzw. der Anzahl der Oszillatortakte durch den nächsten Synchronisationsimpuls zurückgesetzt, die Schwellen gemäß ④ entsprechend doppelt so schnell erreicht und die Abtastfenster 5 und 5i doppelt so häufig erzeugt.

Einzige Begrenzung für die Veränderung der Taktfrequenz ist, daß mit abnehmendem Verhältnis von Taktfrequenz des Oszillatortaktes zur Taktfrequenz der Datenimpulse der Anzahl der Oszillatortakte in einem Impuls abnimmt und der relative Fehler, der sich durch das Abzählen der Oszillatortakte, also die Ganzzahligkeit, als Quantisierungsfehler ergibt, zunimmt.

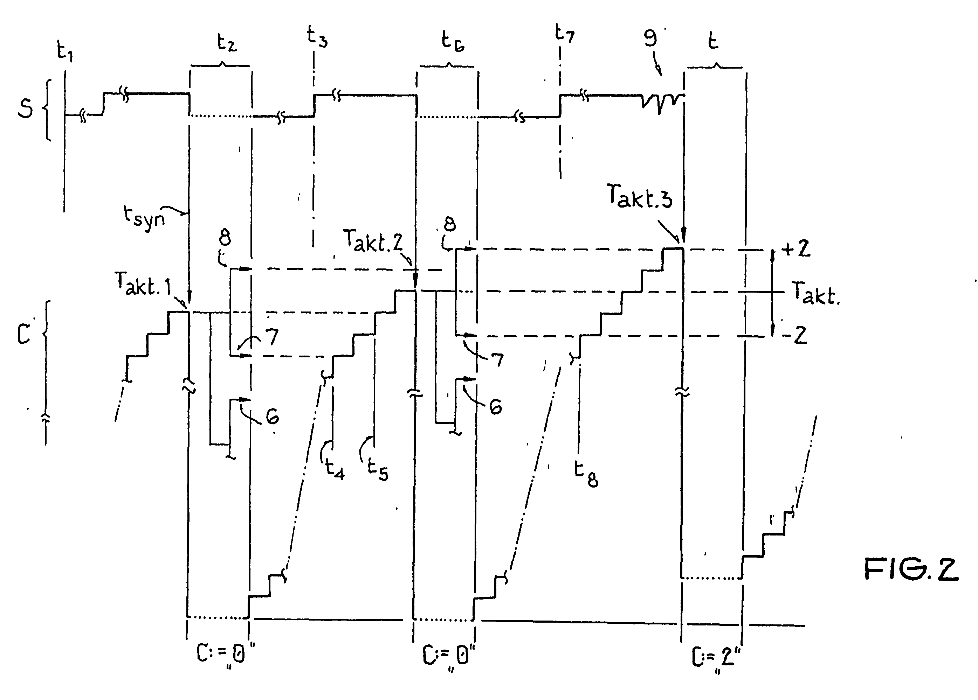

Durch Verwendung der Flankenwechsel in der Mitte eines jeden manchestercodierten Datenimpulses wird es außerdem möglich, mit jedem Synchronisationszeitpunkt und damit quasi mit jedem Datenimpuls den Counter C nachzusynchronisieren, wobei sich die Nachsynchronisation aufgrund des Versatzes jedoch immer auf zwei Impulse erstreckt. Diese Nachsynchronisation auf Basis der Datenimpulse wird in Figur 2 gezeigt.

Figur 2 zeigt neben dem bekannten Signal S, in welches zum Synchronisationszeitpunkt wiederum die real nicht existente, virtuelle Unterbrechung eingefügt wurde, Ausschnitte des an sich ebenfalls bekannten Hochzählens des Counters C, jedoch stark vergrößert, so daß die Inkrementierung für die einzelnen Oszillatortakte erkennbar wird. Die Ausschnitte beschränken sich auf den Anfang und das Ende eines jeden Zählzykluses (vgl. ② in Fig. 1), da diese Ausschnitte für die Nachsynchronisation entscheidend sind. Innerhalb der virtuellen Unterbrechung wird nun besonders deutlich die Anpassung der Schwellen in Abhängigkeit von der jeweils aktuell gültigen Taktfrequenz $T_{akt}$ erkennbar.

Betrachtet man beginnend zum Zeitpunkt t1 zunächst S, welches bspw. einen "High"-Pegel in der nichtinvertierten Impulshälfte eines Datenimpulses DX-1 aufweist, so erreicht in t2 S den Flankenwechsel auf die nunmehr invertierte Impulshalfte mit dem "Low"- Pegel. Der Flankenwechsel ist ungestört und daher als Synchronisationszeitpunkt erkennbar. Folglich wird der aktuelle Zählerendwert des Counters C als aktuell gültige Taktfrequenz $T_{akt}$ erfaßt und der Counter C neu gestartet (C: = 0).

Die Fig. 2 beschrankt sich einzig aus Darstellungsgründen auf die aus Fig. 1 bereits bekannte viertniedrigste Schwelle 6, die in Fig. 1 zum dortigen Zeitpunkt t8 das aktuelle Abtastfenster 5 beendete, sowie auf die zwei obersten Schwellen 7 und 8, die den Bereich des nächsten zulässigen Flankenwechsels begrenzen. Da alle anderen Schwellen in identischer Weise aus der aktuell gültigen Taktfrequenz $T_{akt}$ abgeleitet werden, ist deren Anpassung zu der im folgenden beschriebenen äquivalent.

Bevor im Zeitpunkt t2 der aktuelle Zählerendwert des Counters C als aktuell gültige Taktfrequenz $T_{akt1}$ angenommen wird, kann noch eine Reihe von logischen Prüfschritten durchgeführt werden, bspw. diese mit bekannten zugelassenen Taktfrequenzen und deren Toleranzbereichen etc. verglichen werden.

Wird nun der aktuelle Zählerendwert des Counters C als aktuell gültige Taktfrequenz $T_{akt}$ übernommen, werden hieraus alle Schwellen neu berechnet, von denen in Fig. 2 die Schwellen 6, 7 und 8 dargestellt sind. Die Schwellen ergeben sich bspw. als prozentuale Anteile von $T_{akt}$. Wird bspw. $T_{akt1}$ mit 100 angenommen, so sind die Schwellen 7 und 8, die den Bereich des nächsten zulässigen Flankenwechsels begrenzen, mit bspw. $\pm 2\%$, also 98 und 102 Takten bestimmt, Schwelle 6 mit 96% von $T_{akt}$, also 96 Takten bzgl. $T_{akt1}$.

Gleichzeitig wird in t2 der Counter C neu gestartet (C: = 0) und inkrementiert sich mit der Anzahl der Oszillatortakte zunächst noch während der invertierten Impulshälfte des Datenimpulses Dx-1, dann während der ersten Impulshälfte von Dx unverändert weiter. Entgegen dem aus $T_{akt1}$ zu erwartenden Zeitpunkt t5 tritt erst einen Takt später, also zu t6, der Flankenwechsel in Dx auf. Ursache dieser Abweichung kann neben sendeseitigen Abweichungen insbesondere auch eine leichte Verschnellerung der Oszillatortaktfrequenz sein, also letztlich sich nicht S, sondern C relativ dazu verändert haben. Letzteres kann insbesondere bei einfachen RC-Oszillatoren durch thermische Erwärmung oder Alterung der Bauelemente hervorgerufen werden.

Da t6 aber noch innerhalb der Schwellen 7 und 8 liegt, wird der aktuelle Zählerendwert des Counters C als "neue" aktuell gültige Taktfrequenz $T_{akt2}$ = 101 Takte

übernommen. Die Schwellen, in Fig. 2 nur dargestellt die Schwellen 6, 7 und 8, werden entsprechend angepaßt. Die Schwellen 7 und 8, als 98 und 102% bestimmt, werden sich bei Berücksichtigung der Ganzzahligkeit also jeweils nur um einen Takt nach oben verschieben (98% von 101=98,98 $\approx$99 ), Schwelle 6 mit 96% von $T_{akt2}$, also 97 Takten bzgl. $T_{akt2}$. Der Counter C wird neu gestartet und mit den Oszillatortakten wieder inkrementiert.

Im nun folgenden Datenimpuls Dx+1 tritt eine Störung 9 auf, bspw. durch eine Schwankung der Betriebsversorgungsspannung. Zum gemäß $T_{akt2}$ also bei 101 Takten zu erwartenden Zeitpunkt t8 liegt kein Flankenwechsel vor bzw. ist als solcher aufgrund der Störungen nicht zu erkennen.

Zum Zeitpunkt t9 erreicht der Counter C dann die obere Schwelle des für den nächsten Flankenwechsel zulässigen Bereichs. Um auch bei solchen Störungen die Übertragung nicht zwangsläufig abbrechen zu müssen, ist es sehr vorteilhaft, mit dem Erreichen der oberen Schwelle automatisch einen Synchronisationszeitpunkt festzusetzen. Der Counter C wird neu gestartet, diesmal jedoch mit einem Vorlaufwert, in diesem Fall zwei Takten (C:=2). Würde man dies nicht machen, würde sich der Counter C gegenüber den Datenimpulsen immer weiter verschieben, da die obere Schwelle ja größer als die aktuell gültige Taktfrequenz ist. Die aktuell gültige Taktfrequenz, in diesem Beispiel $T_{akt2}$, sowie die Schwellen, in Fig. 2 Schwellen 6,7,8, werden beibehalten.

In Figur 3 wird die Erfassung des Logikpegels durch Mehrfachabtastung in der invertierten und nichtinvertierten Impulshälfte eines Datenimpulses DX="1" gezeigt. Zwar ist es natürlich auch möglich, jeweils in einer Impulshälfte nur einmal abzutasten, um hieraus den Logikwert des Datenimpulses abzuleiten, jedoch ist das Risiko einer Störung des Signals S an den zwei einzigen Abtaststellen relativ groß. Wie letztlich aus der gattungsbildenden EP 0 813 321 bekannt ist, bietet es sich an, die relativ hohe Oszillatortaktfrequenz auch zur Mehrfachabtastung zu nutzen. Wie bereits in Figur 1e - 1f zu entnehmen war, wird für jede Impulshälfte des Datenimpulses Dx jeweils ein Abtastfenster 5, 5i erzeugt. Die Abtastfenster 5 und 5i für einen Datenimpuls Dx liegen dabei jedoch in zwei aufeinander folgenden Zählzyklen des Counters C.

So ist in Figur 3a ein diesmal gestörtes Signal S eines Datenimpulses Dx sowie das Abtastfenster 5 für die nichtinvertierte Impulshälfte dx, 5i für die invertierte Impulshälfte dxi dargestellt. Dazwischen liegt der Flankenwechsel innerhalb der Schwellen 7 und 8 des zulässigen Bereichs des nächsten Flankenwechsels. Es wird bereits deutlich, daß die Abtastfenster 5 und 5i jeweils etwas kleiner sind als die Impulshälften, wodurch insbesondere das Einschwingverhalten oder die Abschwächung beim Flankenwechsel automatisch sich bei der Pegelbewertung nicht störend bemerkbar machen. Derartige Störungen können bspw. durch die Frequenzselektivität des Übertragungsmediums und der Empfangsschaltung hervorgerufen werden.

In 3b wird das Inkrementieren des Counters C in diesem Ausführungsbeispiel durch die Anzahl der Takte ausgedrückt, wobei aus Gründen einer überschaubaren Darstellung die Taktfrequenz mit 28 Takten sehr gering angesetzt wurde. Aus 3b wird trotzdem deutlich, daß gerade in der Mitte des Datenimpulses Dx, also zum Flankenwechsel, die Rucksetzung des Counters C erfolgt. Die Schwellen für den Anfang und das Ende der Abtastfenster liegen wie folgt: Abtastfenster 5 für die nichtinvertierte Impulshälfte dx Anfang bei 17 Takten, Ende bei 26 Takten, Abtastfenster 5i für die invertierte Impulshälfte dxi Anfang bei 3, Ende bei 12 Takten.

Trotz des bereits gegenüber der Datenimpulshälfte dx kleineren Abtastfensters 5 ist zum ersten Abtastpunkt, dem Takt 17, das Signal S noch zu langsam (Fehler e1) angestiegen und erreicht noch nicht die Mittelschwelle SW 0/1, so daß dieser Takt 17 als logische 0" gewertet und der Pegelzählerwert nicht erhöht wird. Die darauf folgenden Takte 18 - 22 werden fehlerfrei als "1" erkannt und der Pegelzählerwert entsprechend inkrementiert. Beim Takt 23 ist ein zweiter möglicher Fehler e2 im Signal S dargestellt, bei dem der Pegel kurzzeitig unter die Mittelschwelle SW 0/1 sinkt, bspw. aufgrund eines kurzzeitigen Versorgungsspannungsabfalls. Der Fehler e2 führt aufgrund der Mehrfachabtastung ebenfalls noch zu keiner Fehlbewertung des Pegels.

Während der Takte 27 bis 2 wird die Pegelwertzählung ausgesetzt, da hier die Störungen durch den Pegelwechsel relativ hoch sind und außerdem die Nachsynchronisation erfolgt (Vgl. Fig. 1 und 2). In diesem Ausführungsbeispiel wird der vergleich zwischen der nichtinvertierten und invertierten Impulshälfte dx, dxi dadurch erreicht, daß man die Pegelwertzählung invertiert fortsetzt. Selbstverständlich könnte auch der in der nichtinvertierten Impulshälfte erreichte Pegelzählerwert zwischengespeichert, der Pegelzähler zurückgesetzt und für die invertierte Impulshälfte mit dem invertierten Signal $\bar{S}$ neu gestartet werden. die beiden Pegelzählwerte könnten dann miteinander verglichen werden. In Fig. 3 erfolgt dies durch Addition. Ab Takt 3 wird nun $\bar{S}$ abgetastet und somit der Pegelzahlerwert bei "0" inkrementiert, da $\bar{0}=1$. In Takt 7 tritt noch ein weiterer Fehler e3 auf, diesmal über die Mittelschwelle SW 0/1. Durch die Addition der Oszillatortakte kann man am Ende nach Takt 12 nun aus dem Pegelzählerwert durch Vergleich mit dem unteren Schwellwert SW0 und dem oberem Schwellwert SW1 den logischen Wert des Datenimpulses Dx ableiten. Die Schwellwerte SW0 und SW1 schließen dabei einen Bereich ein, in dem ein Pegelzählerwert als fehlerhaft erkannt wird (ERROR). Außerdem kann aus dem Pegelzählerwert die Anzahl der Fehler (3*e) abgeleitet werden.

Durch die Mehrfachabtastung könne kleinere Störungen im Signal S somit ausgeglichen werden.

## Weiterbildung mit Fixierung der aktuell gültigen Taktfrequenz für eine Anzahl von Datenimpulsen

Da bei der Nachsynchronisation aus den Datenimpulsen, wie in Fig. 1 und 2 gezeigt, eine Abweichung der Taktfrequenz auf jeweils den zulässigen Bereich des nächsten Flankenwechsels begrenzt ist, kann das Verfahren der Nachsynchronisation nochmals deutlich vereinfacht werden, wenn nur zu Anfang auf Basis der Synchronisationsimpulse die aktuell gültige Taktfrequenz bestimmt und daraus die Schwellen abgeleitet werden, nachfolgend für eine bekannte Anzahl von Datenimpulsen die Taktfrequenz als konstant angenommen und nur jeweils der Synchronisationszeitpunkt für jeden der Datenimpulse nachsynchronisiert wird.

Betrachtet man nochmals Fig. 1, so bedeutet dies, daß im Zählzyklus ② einmal die aktuelle Taktfrequenz $T_{akt}$ als Anzahl der Oszillatortakte zwischen t1 und t3 bestimmt wird, diese jedoch für die Anzahl nachfolgender Datenimpulse D1, D2 ... als konstant angenommen wird. Der zahlerendwert des Counters C zum nächsten Synchronisationszeitpunkt t10 führt dann nicht zu einer erneuten Neubestimmung der Schwellen. Es erweist sich dabei als vorteilhaft, wenn die bekannte Anzahl der Datenimpulse nicht zu groß ist, denn danach wird durch einen Reset und wenigstens einen, in Fig. 1 zwei synchronisationsimpulse neu zeit- und frequenzsynchronisiert.

Durch die Synchronisation nur auf Basis der Synchronisationsimpulse erhöht sich aber die Abhängigkeit der korrekten Datenübernahme von der korrekten Erkennung der Synchronisationszeitpunkte der Synchronisationsimpulse. Daher ist es günstig, wenn man nur eine begrenzte Anzahl, bspw. zwei, an als bekannt zugelassenen Taktfrequenzen verwendet, da hierdurch ein Vergleich mit diesen möglich wird oder über mehrere Zählzyklen und entsprechend mehrere Synchronisationsimpulse hinweg zunächst die Zählerendwerte des Counters C jeweils erfaßt und aus einem logischen Vergleich dieser untereinander und/oder mit den bekannten zugelassenen Taktfrequenzen eine aktuell gültige Taktfrequenz abgeleitet wird. Das Risiko einer Störung gerade in den zwei entscheidenden Synchronisationsimpulsen wird dadurch reduziert. So ist bspw. neben einer Taktfrequenz für den Diagnosebetrieb eines Bussystems für Insassenschutzeinrichtungen, insbesondere für Steuermodule von Airbags, Gurtstraffern etc., die mit einer Zentraleinheit verbunden sind, eine Diagnosetaktfrequenz vorgesehen. Um in einer Aufprallsituation des Kraftfahrzeuges die Insassenschutzeinrichtungen dann auszulösen, ist eine Notfallfrequenz vorgesehen ist, die doppelt oder vierfach so hoch ist, wodurch sich die für den Insassenschutz so wesentliche Auslösezeit reduzieren läßt. Als Reset vor dem Beginn des ersten Synchronisationsimpulses ist dafür neben den bekannten Reset-Varianten eines Resets durch Konstanthalten des Pegels des Signals S, bspw. S="0" oder "1" oder einem separaten Reset über eine separate Resetleitung außerdem ein Reset durch einen vom Diagnosebetrieb abweichenden Signalpegel, insbesondere eine gegenüber dem Diagnosebetrieb erhöhten "High"-Pegel vorgesehen, wodurch zu jedem Zeitpunkt während der Signalübertragung eine derartige Auslösesequenz über das Diagnosesignal überschrieben werden kann, den Datenübernahmetaktgenerator rücksetzt und die nachfolgenden Impulse als Synchronisationsimpulse zum Lernen der Taktfrequenz und des synchronisationszeitpunktes nutzt.

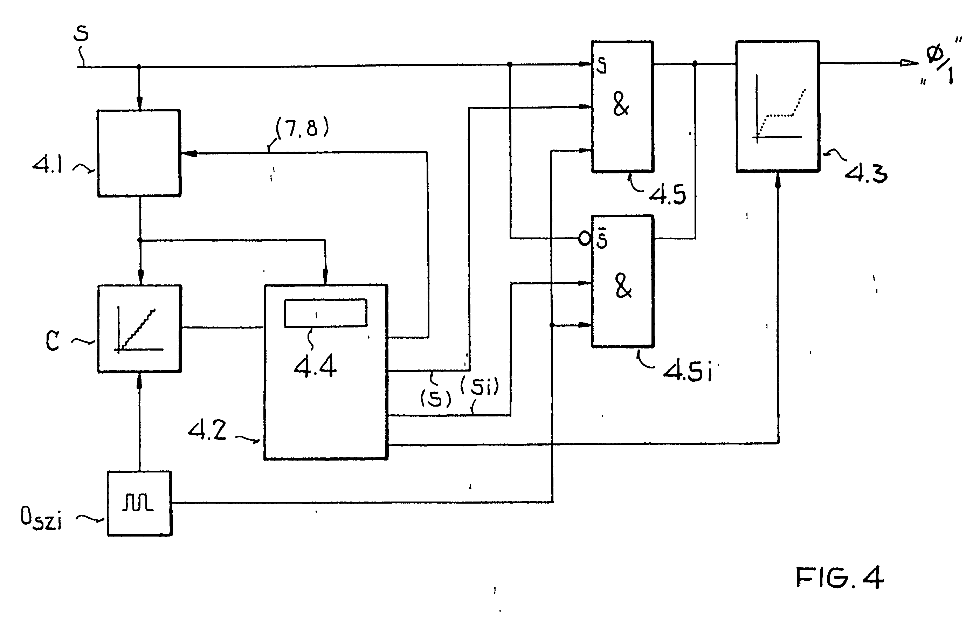

Figur 4 zeigt ein Blockschema eines Empfängers mit einem steuerbaren Datenübernahmetaktgenerator zur Durchführung des Verfahrens. Das am Eingang anliegende Signal S wird zunächst einem Modul 4.1 zur Flankenwechselerkennung zugeführt, welches die Flankenwechsel auf dem Signal S erkennt und unter Berücksichtigung der Art und des Zeitpunktes der Flanke einen Synchronisationszeitpunkt definiert und einen Synchronisationsimpuls setzt. Davon wird der damit verbundene Counter C neu gestartet, wobei eventuell ein Vorlaufwert gesetzt wird, falls innerhalb der Grenzen des nächsten zulässigen Flankenwechsels dieser nicht erkennbar war. Der Counter C inkrementiert die ihm vom Oszillator Oszi zugeführten Oszillatortakte zwischen zwei Synchronisationszeitpunkten. Der Zählwert des Counters C wird dabei immer von einem Schwellwertkomparator 4.2 mit den Schwellen für die Abtastzeitfenster, für die Grenzen des nächsten zulässigen Flankenwechsels und für die Datenübernahme verglichen und entsprechende Ausgangssignale beim Erreichen der Schwellen gesetzt bzw. rückgesetzt. Außerdem übernimmt der Schwellwertkomparator 4.2 zumindest einmal nach einem Synchronisationszeitpunkt, eventuell mit jedem dieser, den Zählerendwert in ein Register 4.4, wenn das Modul 4.1 einen Synchronisationsimpuls sendet. In Abhängigkeit vom Wert im Register 4.4 wird die aktuell gültige Taktfrequenz abgeleitet, wobei eventuell zuvor ein Vergleich mit bekannten zugelassenen Taktfrequenzen erfolgt. Der Wert im Register 4.4 bestimmt nachfolgend die Wert der Schwellen. Außerdem werden die Anzahl der Datenimpulse gezählt und nach Erreichen der vereinbarten Anzahl das Register 4.4 zurückgesetzt.

Vom Schwellwertkomparator 4.2 werden die Abtastzeitfenster 5 und 5i erzeugt, indem während dieser die UND-Glieder 4.5 für die nichtinvertierte Impulshälfte und 4.5i für die invertierte Impulshälfte eines Datenimpulses freigegeben werden. Dem UND-Glieder 4.5i für die invertierte Impulshälfte wird das Signal negiert $\bar{S}$ zugeführt. Die Mehrfachabtastung erfolgt dann mit dem Oszillatortakt, indem während der Abtastzeitfenster 5 und 5i zu jedem Oszillatortakt eines der UND-Glieder 4.5 oder 4.5i einen "High"-Pegel am Ausgang erzeugt, wenn das Signal S oder $\bar{S}$ einen solchen Pegel aufweist. Der Pegelzähler 4.3 erfaßt die zu einem Datenimpuls gehörenden Abtastzeitfenster 5 und 5i und übergibt vorzugsweise zum Synchronisationszeitpunkt den jeweils aus dem Pegelzählerwert ermittelten Logikpegel 0 oder 1.

## Patentansprüche

1. Verfahren zum Übertragen von digitalen Datenimpulsen mit zwei Logikpegeln ("0", "1"),

a) bei dem vor dem Senden der zu übertragenden Datenimpulse (D) wenigstens ein Synchronisationsimpuls (syn1, syn2) mit einem Synchronisationszeitpunkt ($t_{syn}$) und einer für wenigstens einen nachfolgenden Datenimpuls (D) aktuellen Taktfrequenz übertragen wird, welche empfangsseitig einen in seiner Taktfrequenz steuerbaren Datenübernahmetaktgenerator zeit- und frequenz - synchronisiert,

b) indem mit einer empfangsseitig erzeugten Oszillatorfrequenz ein die Taktfrequenz repräsentierender Zeitbereich mit während des Zeitbereichs auftretenden Oszillatortakte abgezählt wird, wobei die Oszillatorfrequenz deutlich größer, vorzugsweise ein Vielfaches, der Impulsdauer ist, und daraus eine aktuell gültige Taktfrequenz abgeleitet wird,

c) in Abhängigkeit von der aktuell gültigen Taktfrequenz und/oder des Synchronisationszeitpunktes eine Abtastung des Logikpegels erfolgt,

d) und bei Abweichungen der aktuellen Taktfrequenz und/oder dem Synchronisationszeitpunkt bei einem der nachfolgenden Datenimpulse der Datenübernahmetaktgenerator zeitund/oder frequenz- nachsynchronisiert wird, **dadurch gekennzeichnet, daß**

e) Synchronisations- und Datenimpulse mit einer invertierten und einer nichtinvertierten Impulshälfte (Dxi, Dx) manchestercodiert sind mit einem zwischen jeweils den Impulshälften liegenden Flankenwechsel,

f) dieser Flankenwechsel jeweils als Synchronisationszeitpunkt ($t_{syn}$) verwendet wird,

g) die auftretenden Oszillatortakte während der Zeitdauer zwischen jeweils zwei nacheinander folgenden Synchronisationszeitpunkten ($t_{syn}$) als der die Taktfrequenz repräsentierende Zeitbereich in einem Zählwert abgezählt werden,

h) der Datenübernahmetaktgenerator wenigstens nach einem Synchronisationsimpuls zum Synchronisationszeitpunkt den Zählwert übernimmt und daraus die jeweils aktuell gültige Taktfrequenz ableitet, und

i) zeitlich versetzt dazu den Logikpegel der Datenimpulse erfasst, wobei

j) für die Nachsynchronisation aus den Datenimpulsen (D) der Datenübernahmetaktgenerator in Abhängigkeit von der aktuell gültigen Taktfrequenz ($T_{akt}$) Grenzen des nächsten zulässigen Flankenwechsels (7-8) ermittelt und nur jene Flankenwechsel als Synchronisationszeitpunkt ($t_{syn}$) annimmt, die innerhalb der Grenzen (7-8) liegen,

k) und falls kein Flankenwechsel innerhalb der Grenzen des nächsten zulässigen Flankenwechsels (7-8) liegt, die obere Grenze (8) als Synchronisationszeitpunkt ($t_{syn}$) festgesetzt, die Zählung der Oszillatortakte jedoch mit einem Vorlaufwert (C:=2) neu gestartet wird.

2. Verfahren nach Anspruch 1, **dadurch gekennzeichnet, daß** der Datenübernahmetaktgenerator für die Synchronisation aus dem oder den Synchronisationsimpuls(-en) als Synchronisationszeitpunkt ($t_{syn}$) nur ansteigende oder abfallende Flankenwechsel annimmt und der bzw die Synchronisationsimpuls(e) entsprechend als Logikpegel eine "Null" oder "Eins" in der jeweils ersten Impulshälfte aufweisen.

3. Verfahren nach Anspruch 2, **dadurch gekennzeichnet, daß** durch einen Reset und wenigstens einen nachfolgenden Synchronisationsimpuls ein erwünschter Wechsel der Taktfrequenz bewirkt wird.

4. Verfahren nach Anspruch 3, **dadurch gekennzeichnet, daß** die Anzahl der nach dem bzw den Synchronisationsimpuls(en) übertragenen Datenimpulse vorbestimmt ist und spätestens nach dem Erreichen dieser Anzahl von Datenimpulsen ein Reset durchgeführt wird.

5. Verfahren nach einem der vorangehenden Ansprüche, **dadurch gekennzeichnet, daß** in beiden Impuishälften (dx/dxi) eines Datenimpulses (Dx) wenigstens jeweils einmal der Logikpegel abgetastet wird, wobei eine Impulshälfte jeweils vor und eine nach dem Flankenwechsel liegt und die dabei ermittelten Logikpegel dann als korrekt erkannt werden, wenn diese zu einander invertiert ($dxi = \bar{d}\ \bar{x}$) sind.

6. Verfahren nach Anspruch 5, **dadurch gekennzeichnet, daß** innerhalb einer jeden Impulshälfte ein Abtast-Zeitfenster (5, 5i) vorgesehen ist, welches in Dauer und Abstand zu dem aktuellen Synchronisationszeitpunkt ($t_{syn}$) durch jeweils eine Anzahl von Oszillatortakten bestimmt ist, die

a1) fest vorgegeben ist oder

a2) aus der die aktuelle Taktfrequenz repräsentierenden Anzahl von Oszillatortakten zwischen zwei nacheinander folgenden Synchronisationszeitpunkten abgeleitet wird, insbesondere ein vorgegebener Prozentsatz dieser Anzahl von Oszillatortakten ist, und

b) während der Dauer des Abtast-Zeitfensters mit jedem Oszillatortakt der Logikpegel abgetastet wird, wobei jeweils zu einem Datenimpuls

b1) während der zugehörenden nichtinvertierten Impulshälfte die Anzahl aller "High"-Pegel und additiv dazu

b2) während der zugehörenden invertierten Impulshälfte die Anzahl aller "Low"-Pegel in einem Pegelzähler als Pegelzählerwert gezählt wird, und

c) aus dem Pegelzählerwert der Logikpegel des Datenimpulses abgeleitet wird.

7. Verfahren nach Anspruch 6, **dadurch gekennzeichnet, daß** der Pegelwert mit einem unteren und einem oberen Schwellwert verglichen wird, wobei als Logikpegel

a) ein "High"-Pegel ("1") angenommen wird, wenn der Pegelzählerwert oberhalb des oberen Schwellwertes (SW1) liegt,

b) ein "Low"-Pegel ("0") angenommen wird, wenn der Pegetzählerwert unterhalb des unteren Schwellwertes (SW0) liegt und

c) als fehlerhaft (ERROR) angenommen wird, wenn der Pegelzählerwert zwischen unterem und oberem Schwellwert (SW0=<PZW<SW1) liegt.

8. Verfahren nach Anspruch 7, **dadurch gekennzeichnet, daß** der untere und obere Schwellwert (SW0,SW1) jeweils aus der aktuell gültigen Taktfrequenz ($T_{akt}$) abgeleitet wird.

9. Verfahren nach Anspruch 8, **dadurch gekennzeichnet, daß**

a) das nur eine Anzahl, vorzugsweise zwei, bekannte zugelassene Taktfrequenzen zum Übertragen der digitalen Datenimpulse vorgesehen sind,

b) die Synchronisation aus dem oder den Synchronisationsimpuls(en) einen Fehler erkennt, falls die durch Zählen der Oszillatortakte zwischen zwei benachbarten Synchronisationszeitpunkten ermittelte Taktfrequenz nicht in Toleranzbereiche der bekannten zugelassenen Taktfrequenzen fällt,

c) falls die Synchronisation eine ermittelte Taktfrequenz als eine bekannte zugelassene Taktfrequenz erkennt, der obere und untere Schwellwert zur Bewertung des Pegelzählerwertes aus der bekannten zugelassenen Taktfrequenz abgeleitet und für die Anzahl der Datenimpulse konstant gehalten wird.

## Claims

1. Method for transmitting digital data pulses with two logic levels ("0", "1 "),

a) in which, before transmitting the data pulses (D) to be transmitted, at least one synchronization pulse (syn1, syn2) with an instant of synchronization ($t_{syn}$) and with a clock frequency that is a current clock frequency for at least one subsequent data pulse (D) is transmitted which clock frequency, at the receiving end, carries out a time and frequency synchronization of a data acceptance clock generator controllable with respect to its clock frequency;

b) by counting, with an oscillator frequency generated at the receiving end, a time domain representing the clock frequency with oscillator clock pulses occurring during the time domain, wherein the oscillator frequency is significantly greater than and preferably a multiple of the duration of the pulse, and deriving a currently valid clock frequency from that;

c) sampling the logic level depending on the currently valid clock frequency and/or the instant of synchronization;

d) and carrying out a time and/or frequency resynchronization of the data acceptance clock generator in the event of deviations of the current clock frequency and/or the instant of synchronization of one of the subsequent data pulses; **characterized in that**

e) synchronization pulses and data pulses are Manchester-encoded with an inverted and a non-inverted half pulse (Dxi, Dx) with an edge change lying between the respective half pulses;

f) this edge change is used each time as the instant of synchronization ($t_{syn}$);

g) the occurring oscillator clock pulses are counted to obtain a counted measurand during the period of time between every two consecutive instants of synchronization ($t_{syn}$) as the time domain representing the clock frequency;

h) the data acceptance clock generator accepts the counted measurand at the instant of synchronization at least after one synchronization pulse and derives the respective currently valid clock frequency from that; and

i) detects the logic level of the data pulses in a time-shifted way; wherein

j) for resynchronization on the basis of the data pulses (D), the data acceptance clock generator, depending on the currently valid clock frequency ($T_{akt}$), determines limits of the next permissible edge change (7-8) and accepts as instants of synchronization ($t_{syn}$) only those edge changes that lie within the limits (7-8);

k) and in the case that no edge change lies within the limits of the next permissible edge change (7-8), the upper limit (8) is fixed as the instant of synchronization ($t_{syn}$), the counting of the oscillator clock pulses, however, being restarted with an advanced value (C: = 2).

2. Method according to claim 1, **characterized in that** the data acceptance clock generator, for synchronization on the basis of the synchronization pulse/s, only accepts positive-going or negative-going edge changes as instants of synchronization ($t_{syn}$) and the synchronization pulse/s correspondingly comprise/s a "zero" or a "one" as the logic level in the respective first half pulse.

3. Method according to claim 2, **characterized in that** a desired change of the clock frequency is effected by means of a reset and at least one subsequent synchronization pulse.

4. Method according to claim 3, **characterized in that** the number of data pulses transmitted after the synchronization pulse/s is predetermined and that a reset is carried out after reaching this number of data pulses at the latest.

5. Method according to any one of the preceding claims, **characterized in that** in each of the two half pulses (dx/dxi) of a data pulse (Dx) the logic level is sampled at least once, wherein in each case one half pulse lies before the edge change and one after it and the thus determined logic levels are recognized as being correct when they are inverted in relation to each other (dxi = $\bar{d}$ $\bar{x}$).

6. Method according to claim 5, **characterized in that** within each half pulse a sampling time window (5, 5i) is provided, wherein the duration of said window and the interval between said window and the current instant of synchronization ($t_{syn}$) are each time determined by a number of oscillator clock pulses that

a1) is predetermined or

a2) is derived from the number of oscillator clock pulses lying between two consecutive instants of synchronization and representing the current clock frequency, being in particular a predetermined percentage of this number of oscillator clock pulses; and

b) that within the duration of the sampling time window, the logic level is sampled with each oscillator clock pulse, wherein for each data pulse

b1) the number of all "high" levels is counted during the respective non-inverted half pulse and in addition to that

b2) the number of all "low" levels during the respective inverted half pulse by means of a level counter to obtain a level counter value; and

c) the logic level of the data pulse is derived from the level counter value.

7. Method according to claim 6, **characterized in that** the level value is compared with a lower and an upper threshold value, wherein the logic level is evaluated as

a) a "high" level ("1") when the level counter value lies above the upper threshold value (SW1);

b) a "low" level ("0") when the level counter value lies below the lower threshold value (SW0); and

c) defective (ERROR) when the level counter value lies between the lower and upper threshold values (SW0 = < PZW < SW1).

8. Method according to claim 7, **characterized in that** the lower and upper threshold values (SW0, SW1) are respectively derived from the currently valid

clock frequency ($T_{akt}$).

9. Method according to claim 8, **characterized in that**

a) only a number of known permitted clock frequencies, preferably two, are provided for the transmission of the digital data pulses;

b) the synchronization on the basis of the synchronization pulse/s detects an error if the clock frequency determined by counting the oscillator clock pulses between two adjacent instants of synchronization does not lie within the tolerance ranges of the known permitted clock frequencies;

c) if the synchronization recognizes a determined clock frequency as a known permitted clock frequency, the upper and lower threshold values for the evaluation of the level counter value are derived from the known permitted clock frequency and held constant for the number of the data pulses.

**Revendications**

1. Procédé de transmission d'impulsions d'information numériques avec deux niveaux logiques ("0", "1 "),

a) dans lequel, avant l'émission des impulsions d'information (D) à transmettre, au moins une impulsion de synchronisation (syn1, syn2) avec un moment de synchronisation ($t_{syn}$) et une fréquence d'horloge actuelle pour au moins une impulsion d'information (D) suivante est transmise, laquelle fréquence d'horloge synchronise en temps et en fréquence, côté réception, une horloge de reprise de données dont la fréquence d'horloge peut être commandée,

b) avec une fréquence d'oscillateur produite côté réception, une plage de temps représentant la fréquence d'horloge étant comptée avec des fréquences d'oscillateur apparaissant pendant la plage de temps, la fréquence d'oscillateur étant nettement supérieure, de préférence de plusieurs fois, à la durée d'impulsion et une fréquence d'horloge actuellement valide en étant dérivée,

c) un échantillonnage du niveau logique intervenant en fonction de la fréquence d'horloge actuellement valide et/ou du moment de synchronisation,

d) une resynchronisation de temps et/ou de fréquence intervenant en cas de divergences de la fréquence d'horloge actuelle et/ou du moment de synchronisation lors de l'une des impulsions d'information suivantes de l'horloge de reprise de données, **caractérisé en ce que**

e) des impulsions de synchronisation et d'information, avec une moitié d'impulsion inversée (Dxi) et une moitié d'impulsion non inversée (Dx), font l'objet d'un codage Manchester avec un changement de flanc situé entre les moitiés d'impulsion respectives,

f) ce changement de flanc est utilisé à chaque fois comme moment de synchronisation ($t_{syn}$),

g) les impulsions d'horloge d'oscillateur qui apparaissent pendant la durée entre à chaque fois deux moments de synchronisation ($t_{syn}$) qui se succèdent sont comptées en une valeur finale en tant que plage de temps représentant la fréquence d'horloge,

h) l'horloge de reprise de données reprend la valeur de comptage au moment de synchronisation au moins après une impulsion de synchronisation et en dérive la fréquence d'horloge qui est respectivement actuellement valide et,

i) saisit, de façon décalée dans le temps par rapport à cela, le niveau logique des impulsions d'information,

j) l'horloge de reprise de données déterminant, pour la resynchronisation à partir des impulsions d'information (D), en fonction de la fréquence d'horloge ($T_{akt}$) actuellement valide, des limites du changement de flanc (7-8) admissible suivant et ne supposant comme moment de synchronisation ($t_{syn}$) que les changements de flanc qui sont situés à l'intérieur des limites (7-8),

k) et, au cas où aucun changement de flanc n'est situé à l'intérieur des limites du changement de flanc (7-8) admissible suivant, la limite supérieure (8) étant fixée comme moment de synchronisation ($t_{syn}$), le comptage des impulsions d'horloge d'oscillateur étant cependant relancé avec une valeur de démarrage (C:=2).

2. Procédé selon la revendication 1, **caractérisé en ce que** l'horloge de reprise de données, pour la synchronisation à partir de l'impulsion de synchronisation ou des impulsions de synchronisation, ne suppose comme moment de synchronisation ($t_{syn}$) que des changements de flanc montants ou descendants et **en ce que** l'impulsion de synchronisation ou les impulsions de synchronisation présentent en conséquence comme niveau logique un "zéro" ou un "un" dans la première moitié d'impulsion respective.

3. Procédé selon la revendication 2, **caractérisé en ce que,** par un reset et au moins une impulsion de synchronisation suivante, un changement souhaité de la fréquence d'horloge est provoqué.

4. Procédé selon la revendication 3, **caractérisé en ce que** le nombre d'impulsions d'information transmises après l'impulsion de synchronisation ou les impulsions de synchronisation est prédéfini et un reset est réalisé au plus tard une fois atteint ce nombre d'impulsions d'information.

5. Procédé selon une des revendications précédentes, **caractérisé en ce que,** dans les deux moitiés d'impulsion (dx/dxi) d'une impulsion d'information (Dx), le niveau logique est échantillonné au moins une fois respectivement, une moitié d'impulsion étant située respectivement avant et une moitié d'impulsion après le changement de flanc, et les niveaux logiques déterminés en l'occurrence étant identifiés comme corrects quand ceux-ci sont inversés l'un par rapport à l'autre (dxi = $\bar{d}\ \bar{x}$).

6. Procédé selon la revendication 5, **caractérisé en ce que**, à l'intérieur de chaque moitié d'impulsion, il est prévu une fenêtre de temps d'échantillonnage (5, 5i) qui est définie en durée et en intervalle au moment de synchronisation ($t_{syn}$) actuel par à chaque fois un nombre d'impulsions d'horloge d'oscillateur, qui

a1) est paramétré de façon fixe ou

a2) qui est dérivé à partir du nombre, représentant la fréquence d'horloge actuelle, d'impulsions d'horloge d'oscillateur entre deux moments de synchronisation qui se suivent, qui est en particulier un pourcentage prédéfini de ce nombre d'impulsions d'horloge d'oscillateur et,

b) pendant la durée de la fenêtre de temps d'échantillonnage, le niveau logique est échantillonné avec chaque impulsion d'horloge d'oscillateur, à chaque fois, pour une impulsion d'information,

b1) pendant la moitié d'impulsion non inversée correspondante le nombre de tous les niveaux "High" et, de façon additive à cela,

b2) pendant la moitié d'impulsion inversée correspondante, le nombre de tous les niveaux "Low" étant comptés dans un compteur de niveau en tant que valeur de compteur de niveau et

c) le niveau logique de l'impulsion d'information étant dérivé de la valeur de compteur de niveau.

7. Procédé selon la revendication 6, **caractérisé en ce que** la valeur de niveau est comparée à une valeur de seuil inférieure et à une valeur de seuil supérieure, en tant que niveau logique,

a) un niveau "High" ("1") étant supposé quand la valeur de compteur de niveau est située au-dessus de la valeur de seuil supérieure (SW1),

b) un niveau "Low" ("0") étant supposé quand la valeur de compteur de niveau est située au-dessous de la valeur de seuil inférieure (SW0) et

c) une erreur étant supposée (ERROR) quand la valeur de compteur de niveau est située entre la valeur de seuil inférieure et la valeur de seuil supérieure (SW0=<PZW<SW1).

8. Procédé selon la revendication 7, **caractérisé en ce que** la valeur de seuil inférieure et la valeur de seuil supérieure (SWO, SW1) sont dérivées respectivement de la fréquence d'horloge ($T_{akt}$) actuellement valide.

9. Procédé selon la revendication 8, **caractérisé en ce que**

a) seul un nombre, de préférence deux, de fréquences d'horloge admises connues sont prévues pour la transmission des impulsions d'information numériques,

b) la synchronisation identifie, à partir de l'impulsion de synchronisation ou des impulsions de synchronisation, une erreur si la fréquence d'horloge déterminée par le comptage des impulsions d'horloge d'oscillateur entre deux moments de synchronisation voisins ne s'inscrit pas dans des plages de tolérance des fréquences d'horloge admises connues,

c) si la synchronisation identifie une fréquence d'horloge déterminée comme une fréquence d'horloge admise connue, la valeur de seuil supérieure et la valeur de seuil inférieure sont dérivées, pour l'évaluation de la valeur de compteur de niveau, à partir de la fréquence d'horloge admise connue et sont maintenues constantes pour le nombre d'impulsions d'information.

FIG.1

FIG.2

EP 0 948 157 B1

FIG.3

FIG.4